# FASCICULE DE BREVET EUROPEEN

(11) **EP 2 185 367 B1**
(45) Date de publication et mention de la délivrance du brevet: **08.08.2018**
(21) Numéro de dépôt: 08851219.9
(22) Date de dépôt: 05.09.2008
(51) Int. Cl.: B42D 15/00

(54) **DOCUMENT SECURISE ET PROCEDE POUR SECURISER UN DOCUMENT**
SICHERES DOKUMENT UND VERFAHREN ZUR SICHERUNG EINES DOKUMENTS
SECURE DOCUMENT AND METHOD FOR MAKING A DOCUMENT SECURE

(30) Priorité: 05.09.2007 FR 0706216
(43) Date de publication de la demande: 19.05.2010
(73) Titulaire: SURYS, 77607 Marne la Vallee Cedex 3 (FR)
(72) Inventeur: NOIZET, Alexandre, F-77700 Chessy (FR); SOUPARIS, Hugues, F-94130 Nogent-sur-Marne (FR)
(74) Mandataire: Bouvier, Thibault
(86) Numéro de dépôt international: PCT/FR2008/001238
(87) Numéro de publication internationale: WO 2009/066017

(56) Documents cités:
- EP-A- 1 501 045
- WO-A-02/03104
- WO-A-92/09444
- WO-A-92/16378
- WO-A-99/36257
- WO-A-2005/106118
- WO-A-2006/029744
- WO-A-2006/056089
- WO-A1-98/19869
- DE-A1- 4 334 847
- DE-A1-102004 014 778
- GB-A- 2 232 927

## Description

L'invention se rapporte à un document sécurisé comprenant un support de données comprenant des perforations visibles par un observateur.

L'invention se rapporte également à un procédé pour sécuriser un document comprenant un support de données, le procédé comprenant au moins une étape dans laquelle :
- on perfore le support de données avec des perforations visibles par un observateur.

Un tel document sécurisé et un tel procédé sont connus de la publication WO-A-9819869.

Dans ce document, le document sécurisé est un passeport. Une page de ce passeport comprend une photographie et une zone perforée. Les perforations de la page représentent sensiblement l'image de la photographie de sorte qu'il est possible d'identifier la page du passeport.

Le document sécurisé décrit dans la publication susmentionnée possède toutefois des inconvénients. En effet, pour que les perforations soient visibles par l'utilisateur, il est nécessaire de faire passer de la lumière au travers des perforations. Pour ce faire, la publication précitée enseigne de soulever la page perforée vers la lumière pour voir les perforations par transmission et donc identifier le support. Dès lors, il est très simple, pour un contrefacteur, de réaliser de nouvelles perforations pour falsifier le support perforé. Ces nouvelles perforations seraient également détectées par transmission sans que l'on puisse distinguer si les nouvelles perforations ont été ajoutées de façon frauduleuse.

Au vu document précité, un problème résolu par l'invention est donc d'améliorer la sécurité conférée par les perforations du support.

Ce problème est résolu par un document sécurisé suivant la revendication 1. Grâce à l'invention, si une éventuelle perforation de falsification est ajoutée aux perforations existantes dans le support par un fraudeur, ces perforations de falsifications vont traverser les moyens réfléchissants, de sorte que ces moyens ne réfléchiront plus la lumière au niveau de ces perforation de falsification. Il y aura donc une différence entre le signal réfléchi par les moyens réfléchissants qui correspond à l'image d'origine, et le signal transmis correspondant à l'image falsifiée. Il sera donc possible de détecter plus facilement une éventuelle falsification par ajout de perforations. Selon un mode de réalisation de l'invention, le support peut comprendre une première face et une deuxième face opposée à la première face, des données étant inscrite sur la première face, les moyens réfléchissants étant fixés sur la deuxième face de sorte que l'observateur puisse voir les perforations par réflexion sur les moyens réfléchissants lorsqu'il observe les données. Ce mode de réalisation a l'avantage de permettre de voir simultanément les données inscrites et les perforations par réflexion. Le fait que le mode de lecture des données inscrites et des perforations soit en réflexion facilite la vérification du document.

De préférence, le document comprend en outre des moyens aptes à générer des effets optiques, les moyens aptes à générer des effets optiques étant agencés par rapport aux moyens réfléchissants de sorte que l'observateur puisse observer les effets optiques au travers des perforations par réflexion sur les moyens réfléchissants.

Grâce à ce mode de réalisation, les perforations peuvent être vues par un observateur avec les effets optiques. Dans ce cas, les perforations permettent de personnaliser les effets optiques comme les hologrammes. Or, les moyens connus pour personnaliser les effets optiques sont complexes et consistent le plus souvent en un marquage laser ou en un hologramme en volume. Ce mode de réalisation permet au contraire de personnaliser simplement les effets optiques grâce aux perforations.

De préférence, les moyens aptes à générer des effets optiques comprennent un réseau de diffraction produisant des effets de diffraction visibles à l'ordre 0 ou à l'ordre 1.

Selon un mode de réalisation de l'invention, le document sécurisé comprend un film adhésif fixé sur le support, le film adhésif comprenant les moyens réfléchissants.

Dans ce cas, le film adhésif peut comprendre une couche adhésive transparente adhérant au support, une couche transparente réfléchissante formant les moyens réfléchissants et une couche (apte à produire des effets optiques, la couche apte à produire des effets optiques étant agencée par rapport à la couche transparente réfléchissante de sorte que l'observateur puisse observer les effets optiques au travers des perforations par réflexion sur la couche transparente réfléchissante.

Un tel agencement par film adhésif permet notamment une application des moyens réfléchissant par transfert à chaud ou par pressage.

De préférence, la couche transparente réfléchissante est superposée à la couche adhésive, et la couche apte à produire des effets optiques est superposée à la couche réfléchissante transparente.

Dans ce cas, la couche apte à produire des effets optiques peut comprendre un réseau de diffraction produisant des effets de diffraction visibles à l'ordre 0 ou à l'ordre 1, le réseau de diffraction étant agencé par rapport à la couche transparente réfléchissante de sorte à structurer une surface de la couche transparente réfléchissante, pour que l'observateur puisse observer les effets de diffraction au travers des perforations par réflexion sur la couche transparente réfléchissante.

La couche transparente réfléchissante peut être formée en un matériau diélectrique transparent.

Selon un mode de réalisation de l'invention, le document sécurisé comprend un film fixé sur la première face du support, le film étant agencé pour générer des premiers effets optiques, le document comprenant en outre des moyens aptes à générer des deuxième effets optiques, les moyens aptes à générer des deuxième effets optiques étant fixés à la deuxième face du support et agencés par rapport aux moyens réfléchissants pour que l'observateur puisse observer les deuxième effets optiques au travers des perforations par réflexion sur les moyens réfléchissants, de sorte que l'observateur puisse voir les premiers effets optiques et les deuxièmes effets optiques lorsqu'il observe la première face du support.

De préférence, le document comprend un film adhésif adhérant à la deuxième face du support, le film adhésif comprenant une couche adhésive transparente adhérant au support, une couche transparente réfléchissante formant les moyens réfléchissants et une couche apte à produire les deuxième effets optiques, la couche apte à produire les deuxième effets optiques étant agencée par rapport à la couche transparente réfléchissante de sorte que l'observateur puisse observer les deuxième effets optiques au travers des perforations par réflexion sur la couche transparente réfléchissante.

Dans tous les modes de réalisation mentionnés ci-dessus, le support peut être en papier, en plastique, ou en polycarbonate.

L'invention se rapporte également à un procédé pour sécuriser un document suivant la revendication 11. De préférence, l'étape d'ajout est réalisée après l'étape de perforation. De la sorte, on garantit que les moyens réfléchissants ne sont pas perforés et peuvent donc correctement réfléchir la lumière. De préférence, le support comprend une première face et une deuxième face opposée à la première face, des données étant inscrite sur la première face, et dans lequel dans l'étape d'ajout, on fixe les moyens réfléchissants à la deuxième face du support.

Selon un mode de réalisation, le procédé comprend en outre une étape dans laquelle on fixe un film transparent sur la première face du support après l'étape de perforation. Comme précédemment, le fait de fixer le film transparent après la perforation permet garantir que le film transparent de la première face ne sera pas perforé.

En outre, l'ajout du film transparent et l'ajout des moyens réfléchissants peuvent être réalisés lors d'un même transfert.

On décrit maintenant un mode de réalisation de l'invention en référence aux figures annexées dans lesquelles :
- FIG. 1 représente un support d'un document sécurisé selon l'invention ;
- FIG. 2 représente un document sécurisé selon un mode de réalisation de l'invention ;
- FIG. 3 représente un document sécurisé selon un autre mode de réalisation de l'invention ;
- FIG. 4 représente un document sécurisé selon encore un autre mode de réalisation de l'invention.

Sur les figures mentionnées ci-dessus, des références identiques se rapportent, sauf indication contraire, à des caractéristiques techniques similaires.

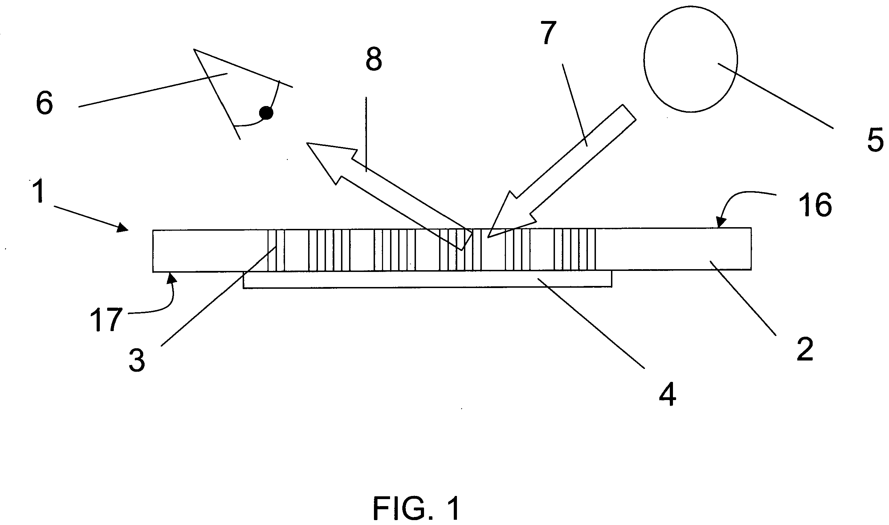

Comme illustré FIG. 1, un document sécurisé 1 selon l'invention comprend un support 2 perforé par des perforations 3. Les perforations 3 sont réalisées dans toute l'épaisseur du support 2, par exemple par une gravure au laser.

La fréquence, le diamètre, la forme et l'orientation des perforations 3 dans le support peuvent être facilement adaptés en fonction de la nature du support 2 du document sécurisé 1. De telles perforations, parfois appelées micro-perforations sont connues dans le domaine de la sécurisation des documents. Une taille typique pour les perforations est d'environ 200 micromètres.

Dans un exemple particulier de l'invention, le document sécurisé 1 est un document personnel associé à un porteur du type passeport, carte d'identité ou permis de conduire, et le support 2 correspond à une page ou une feuille de ce document sécurisé 1. Le support 2 peut être en différents matériaux selon la nature du document constituant le document sécurisé 1, et notamment en papier, en plastique, ou en polycarbonate.

Lorsque le document sécurisé 1 est un document personnel du type passeport, carte d'identité ou permis de conduire, les perforations 3 représentent, de façon connue en soi, au moins une donnée personnelle du porteur, et notamment la date de naissance du porteur, le nom du porteur, ou la photographie du porteur.

Des données relatives au porteur sont également inscrites sur la face supérieure 16 du support 2. Ainsi, un observateur 6 observe le support 2 par la face supérieure 16.

Le document sécurisé 1 comprend également une couche réfléchissante 4 collée à la face inférieure 17 du support 2.

Grâce à cette couche réfléchissante 4, lorsqu'un observateur 6 observe les données inscrites sur la face supérieure 16 du support 2, il peut également observer la forme représentée par les perforations 3. En effet, une source lumineuse 5, par exemple la lumière du jour ou tout autre type de lumière, émet un signal lumineux 7, qui traverse les perforations 3 et se réfléchi sur la couche réfléchissante 4. Le signal réfléchi 8 traverse alors les perforations 3 et peut être observé par l'observateur 6.

Selon les caractéristiques du document sécurisé 1 et des perforations 3, la source lumineuse 5 peut être une source dans le visible, de sorte que les perforations 3 soient visibles en réflexion à l'oeil nu, ou bien une source dans l'infrarouge ou l'ultraviolet.

La couche réfléchissante 4 est par exemple collée sur la face inférieure 17 du support 12 grâce à une colle transparente aux signaux lumineux émis par la source lumineuse 5 afin de ne pas gêner la réflexion des signaux lumineux émis par la source lumineuse 5 vers l'observateur 6.

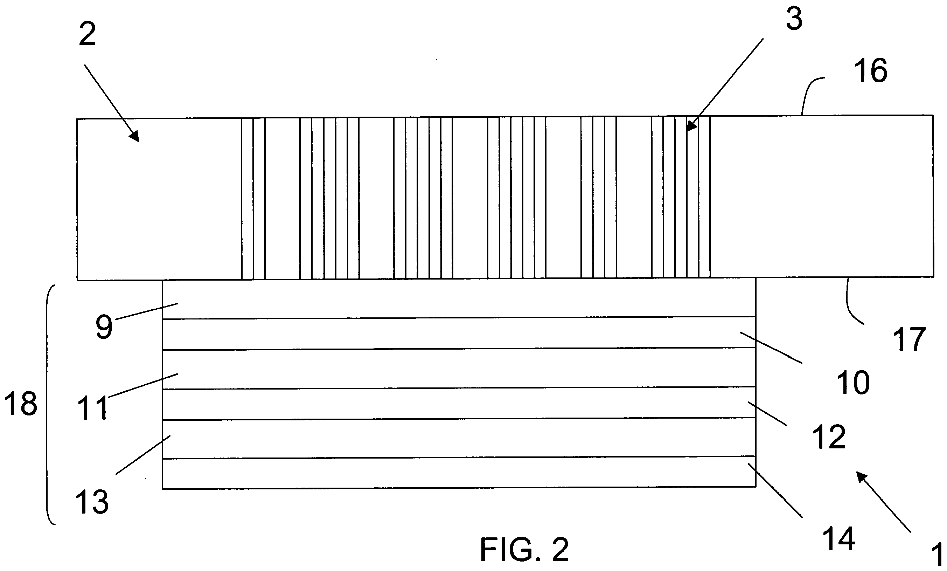

On décrit maintenant un mode de réalisation particulier de l'invention en référence à la figure 2.

Le document sécurisé 1 de la FIG. 2 est identique à celui décrit à la FIG. 1 en ce qui concerne le support 2 et les perforations 3.

A la place de la simple couche réfléchissante 4 illustrée à la FIG. 1, le document sécurisé 1 comprend, sur la face inférieure 17 du support 2 opposée à la face supérieure 16 comprenant des données inscrites, un ensemble de couches référencé de façon générale 18.

L'ensemble 18 comprend une couche adhésive 9 adaptée pour adhérer au support 2 de façon permanente. Cette couche adhésive 9 est transparente aux signaux lumineux issus de la source lumineuse 5 mentionnée ci-dessus en référence à la FIG. 1. L'adhésif constituant la couche adhésive 9 est un adhésif réagissant à la pression ou, de préférence, à la chaleur.

L'ensemble 18 comprend également une couche réfléchissante 10. Cette couche réfléchissante 10 permet de réfléchir le signal lumineux 7 issu de la source lumineuse 5 vers l'observateur 6 comme mentionné en référence à la FIG. 1.

L'ensemble 18 comprend également une couche 11 apte à produire des effets de diffraction. La couche 11 est par exemple une couche thermoformable ou une couche d'estampage. Elle comprend des réseaux diffractants produisant des effets de diffraction visibles à l'ordre 0 ou à l'ordre 1, ou tout autre microstructure optique produisant de tels effets. Elle est thermoformée de façon connue en soi.

De façon également connue, les microstructures de la couche 11 s'étendent à l'interface entre la couche 11 et la couche réfléchissante 10, de sorte que la couche réfléchissante 10 est elle-même microstructurée en surface. Dès lors, la couche réfléchissante 10 est de préférence transparente sur son épaisseur. De la sorte, il est possible d'observer les effets provoqués par les microstructures à l'interface entre les couches 10 et 11 à travers les perforations 3 lorsqu'un observateur 6 observe le support 2 par sa face supérieure 16. Il est donc possible de voir les perforations 3 en combinaison avec les effets optiques générés par les microstructures de la couche 11.

La couche réfléchissante 10 est par exemple une couche d'un matériau diélectrique du type ZnS déposée par évaporation sous vide ou tout autre procédé connu. La nature et l'épaisseur de cette couche réfléchissante 10 sont adaptées à l'effet optique généré par la couche thermoformable 11.

L'ensemble 18 peut également comprendre une couche protectrice 12 destinée à protéger la couche 11 générant les effets optiques. La couche protectrice 12 est par exemple une couche de vernis présentant une résistance aux rayures et aux produits chimiques.

L'ensemble 18 peut également comprendre une couche 13 de détachement par exemple formée de cire.

Il comprend également une couche en polyester 14 ayant une épaisseur comprise entre 10 et 50 micromètres.

La couche de détachement 13 est telle qu'elle peut se détacher de la couche protectrice 12 une fois l'ensemble 18 fixé au support 2. En tirant sur la couche en polyester 14, la couche de détachement 13 peut se détacher de la couche 12.

Ainsi, après détachement de la couche de détachement 13, seules les couches 9, 10, 11 et 12 restent fixées sur le support 2.

Selon une variante de ce mode de réalisation, on supprime les couches 12 et 13. Dans ce cas, les couches sont fixées sur le support 2 sans détachement de couches supérieures, et la couche de polyester 14 a alors une fonction de protection de la couche 11 générant les effets optiques, comme la couche 12 précédemment décrite.

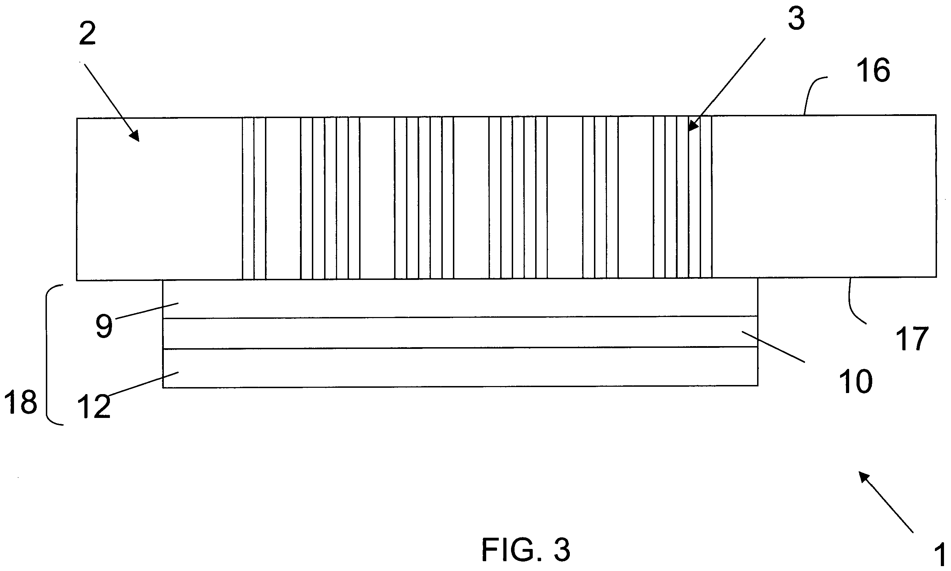

Selon une autre variante de ce mode de réalisation, on peut également supprimer la couche 11 générant les effets optiques. Dans ce cas, comme illustré FIG. 3, l'ensemble 18 comprend seulement une couche adhésive 9, une couche réfléchissante 10, comprenant par exemple dans ce cas simplement un miroir, et une couche de protection 12 destinée à protéger le miroir. Dans ce cas, le miroir formant la couche réfléchissante 10 peut éventuellement être rendu transparent par application d'un matériau diélectrique, par exemple une couche de sulfure de zinc ZnS.

De même, la couche réfléchissante 10 peut également être remplacée par une couche de métal réfléchissant. Cette couche de métal peut être continue ou partielle de manière à dessiner un motif. La réalisation d'un tel type de réflecteur utilise les techniques de demétallisation connues.

L'ensemble 18 est réalisé à partir de procédés connus dans le domaine de la réalisation de films transparents. Il peut être livré en bobine ou en planche. Ils peuvent également être numéroté de façon à assurer un décompte facile pour des raisons de sécurité, de traçabilité ou tout simplement de gestion de stock.

Une fois les perforations 3 du support 2 réalisées, par exemple par gravure laser, on procède au transfert de l'ensemble 18 comprenant au moins une couche réfléchissante 10, par exemple par laminage à chaud ou pressage. Lorsque l'ensemble 18 comprend une couche de détachement 13, on procède au pelage des couches situées au dessus de cette couche de détachement 13. Sur la FIG.2, on procède donc au pelage des couches 13 et 14 après le transfert.

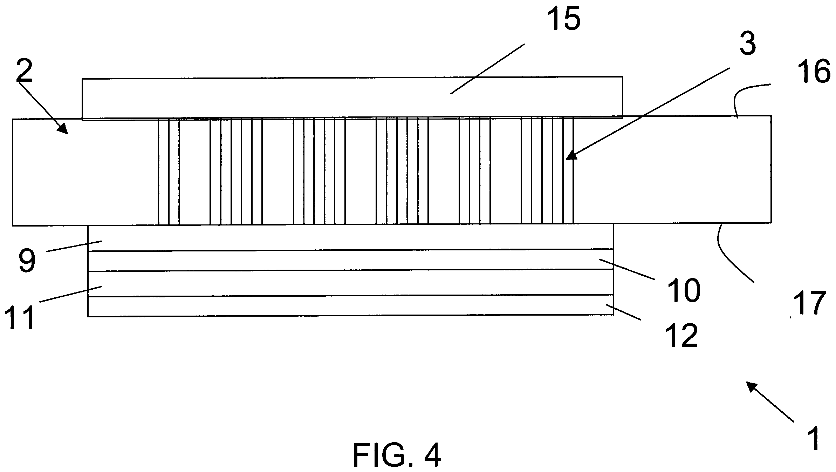

La FIG. 4 illustre un autre mode de réalisation de l'invention.

Comme illustré sur la FIG. 4, le document sécurisé 1 comprend un support 2 perforé de perforations 3 avec, sur sa face inférieure 17 opposée à la face supérieure 16 sur laquelle sont inscrites des données, un ensemble 18 comprenant au moins une couche réfléchissante 10. L'ensemble 18 illustré sur la FIG. 4 correspond à celui illustré à la FIG. 3 ou à celui illustré sur la FIG. 2 lorsque les couches 13 et 14 ont été pelées.

Dans le mode de réalisation illustré sur la FIG. 4, le document sécurisé 1 comprend également un laminat 15 fixé sur la face supérieure 16 du support 2.

Le laminat 15 est un film transparent collé sur le support 2 de manière à le protéger de l'usure naturelle par résistance physico/chimique et également d'empêcher une dégradation volontaire des éléments imprimés sur le support 2 et protégés par le film.

De façon connue en soi, un laminat peut comporter plusieurs couches techniques dont au minimum une des couches suivantes:
- une couche estampée comportant des éléments visuels de différents niveaux de sécurité tels que des hologrammes ou des réseaux de diffraction
- une couche réflective de nature métallique ou diélectrique, pouvant même être appliquée de manière non uniforme
- des impressions visibles variables ou fixes, invisibles (UV, IR, ou autre), réactivables.

Selon ce mode de réalisation de l'invention, le laminat 15 comprend des éléments optiques tels que des hologrammes ou des réseaux de diffraction.

Dans ce cas, les éléments optiques du laminat 15 se combinent avantageusement avec les éléments optiques de la couche thermoformée 11 de l'ensemble 18.

En effet, lorsque l'observateur 6 observe la face supérieure 16 du support 2, il peut voir le signal lumineux 7 émis par la source lumineuse 5 qui traverse les perforations 3, se réfléchit sur la couche réfléchissante 11 tout en générant les effets optiques de la couche 11 comme mentionné ci-dessus. Le signal réfléchi 8 traverse alors de nouveau les perforations 3, et traverse le laminat 8 de sorte à générer de nouveaux effets optiques grâce aux éléments optiques du laminat 8.

Ainsi, selon ce mode de réalisation, les perforations 3 du support 2 sont avantageusement utilisées pour combiner des effets optiques générés par des éléments optiques positionnés sur les faces supérieures 16 et inférieures 17 du support 2, grâce à une réflexion.

De préférence, le laminat 15 de la face supérieure 16 du support 2 est transféré en même temps que l'ensemble 18 de la face inférieure 17 du support 2 par transfert à chaud ou pressage, après la perforation du support 2, de sorte à ne pas introduire d'étapes supplémentaires de fabrication. Ce mode de réalisation a en outre l'avantage de permettre une fusion des éléments adhésifs du laminat 15 et de l'ensemble 18 au travers des perforations 3, ce qui améliore la résistance du support 2.

Dans tous les modes de réalisation décrits ci-dessus, le support 2 peut être une page ou une feuille d'un document personnel comme une carte d'identité, un passeport ou un permis de conduire, mais également d'un document fiduciaire comme un billet de banque ou un chèque.

## Revendications

1. Document sécurisé (1) comprenant un support de données (2), ledit support (2) comprenant :
- une première face (16) et une deuxième face (17) opposée à ladite première face (16), et
- des perforations (3) visibles par un observateur (6),
**caractérisé en ce que**
- le document sécurisé (1) est un document personnel associé à un porteur, comprenant des données relatives au porteur inscrites sur la première face (16),
- les perforations (3) représentent au moins une donnée personnelle du porteur,
- le document sécurisé (1) comprend des moyens réfléchissants (10, 4), collés à la deuxième face (17) du support (2) et agencés pour que de la lumière traversant les perforations (3) du support (2) soit réfléchie au travers des perforations de sorte qu'un observateur puisse voir simultanément les données inscrites et lesdites perforations par réflexion.

2. Document sécurisé (1) selon la revendication 1, comprenant en outre des moyens (11) aptes à générer des effets optiques, les moyens (11) aptes à générer des effets optiques étant agencés par rapport aux moyens réfléchissants (10, 4) de sorte que l'observateur puisse observer les effets optiques au travers des perforations par réflexion sur les moyens réfléchissants (10, 4).

3. Document sécurisé (1) selon la revendication précédente dans lequel les moyens (11) aptes à générer des effets optiques comprennent un réseau de diffraction produisant des effets de diffraction visibles à l'ordre zéro ou à l'ordre un.

4. Document sécurisé (1) selon l'une des revendications précédentes comprenant un film adhésif (18) fixé sur le support (2), le film adhésif comprenant les moyens réfléchissants (10).

5. Document sécurisé (1) selon la revendication précédente dans lequel le film adhésif (18) comprend une couche adhésive transparente (9) adhérant au support (2), une couche transparente réfléchissante (10) formant les moyens réfléchissants (10) et une couche (11) apte à produire des effets optiques, la couche (11) apte à produire des effets optiques étant agencée par rapport à la couche transparente réfléchissante de sorte que l'observateur puisse observer les effets optiques au travers des perforations par réflexion sur la couche transparente réfléchissante.

6. Document sécurisé (1) selon la revendication précédente dans lequel la couche transparente réfléchissante (10) est superposée à la couche adhésive (9), et la couche (11) apte à produire des effets optiques est superposée à la couche réfléchissante transparente (10).

7. Document sécurisé (1) selon l'une des revendications 5 ou 6 dans lequel la couche (11) apte à produire des effets optiques comprend un réseau de diffraction produisant des effets de diffraction visibles à l'ordre 0 ou à l'ordre 1, le réseau de diffraction étant agencé par rapport à la couche transparente réfléchissante de sorte à structurer une surface de la couche transparente réfléchissante, pour que l'observateur puisse observer les effets de diffraction au travers des perforations par réflexion sur la couche transparente réfléchissante

8. Document sécurisé (1) selon la revendication précédente dans lequel la couche transparente réfléchissante (10) est formée en un matériau diélectrique transparent.

9. Document sécurisé (1) selon l'une quelconque des revendications précédentes dans lequel le document sécurisé (1) comprend un film (15) fixé sur la première face (16) du support, le film (15) étant agencé pour générer des premiers effets optiques, le document sécurisé (1) comprenant en outre des moyens (11) aptes à générer des deuxième effets optiques, les moyens (11) aptes à générer des deuxième effets optiques étant fixés à la deuxième face du support (2) et agencés par rapport aux moyens réfléchissants (10, 4) pour que l'observateur puisse observer les deuxième effets optiques au travers des perforations par réflexion sur les moyens réfléchissants (10, 4), de sorte que l'observateur puisse voir les premiers effets optiques et les deuxièmes effets optiques lorsqu'il observe la première face (16) du support (2).

10. Document sécurisé (1) selon la revendication précédente comprenant un film adhésif (18) adhérant à la deuxième face (17) du support (2), le film adhésif (18) comprenant une couche adhésive transparente (9) adhérant au support (2), une couche transparente réfléchissante (10) formant les moyens réfléchissants (10) et une couche (11) apte à produire les deuxième effets optiques, la couche (11) apte à produire les deuxième effets optiques étant agencée par rapport à la couche transparente réfléchissante de sorte que l'observateur puisse observer les deuxième effets optiques au travers des perforations par réflexion sur la couche transparente réfléchissante.

11. Procédé pour sécuriser un document personnel associé à un porteur comprenant un support de données et des données relatives au porteur inscrites sur une première face, le procédé comprenant des étapes de :
- perforation dans laquelle on perfore le support de données avec des perforations représentant au moins une donnée personnelle du porteuret visibles par un observateur ;
- ajout dans laquelle on ajoute au support des moyens réfléchissants collés à une deuxième face du support, opposée à la première face, et agencés pour que de la lumière traversant les perforations du support soit réfléchie au travers des perforations_de sorte qu'un observateur puisse voir simultanément les données inscrites et les perforations par réflexion.

12. Procédé selon la revendication 11 dans lequel l'étape d'ajout est réalisée après l'étape de perforation.

13. Procédé selon l'une des revendications 11 ou 12 dans lequel le support (2) comprend une première face (16) et une deuxième face (17) opposée à la première face (16), des données étant inscrite sur la première face (16), et dans lequel dans l'étape d'ajout, on fixe les moyens réfléchissants à la deuxième face (17) du support.

14. Procédé selon la revendication précédente, comprenant en outre une étape dans laquelle on fixe un film transparent (15) sur la première face (16) du support (2) après l'étape de perforation.

15. Procédé selon la revendication précédente dans lequel l'ajout du film transparent (15) et l'ajout des moyens réfléchissants est réalisé lors d'un même transfert.

## Patentansprüche

1. Sicheres Dokument (1), umfassend einen Datenträger (2), wobei der Träger (2) umfasst:
- eine erste Seite (16) und eine zweite Seite (17), die der ersten Seite (16) entgegengesetzt ist, und
- Perforationen (3), die für einen Betrachter (6) sichtbar sind,
**dadurch gekennzeichnet, dass**
- das sichere Dokument (1) ein personenbezogenes Dokument ist, das einem Inhaber zugeordnet ist, umfassend Daten bezüglich des Inhabers, die auf der ersten Seite (16) eingetragen sind,
- wobei die Perforationen (3) mindestens einen personenbezogenen Datenwert des Inhabers darstellen,
- wobei das sichere Dokument (1) reflektierende Mittel (10, 4) umfasst, die auf die zweite Seite (17) des Trägers (2) geklebt sind und so angeordnet sind, dass Licht, das die Perforationen (3) des Trägers (2) durchquert, durch die Perforationen hindurch reflektiert wird, so dass ein Betrachter gleichzeitig die eingetragenen Daten und die Perforationen durch Reflexion sehen kann.

2. Sicheres Dokument (1) nach Anspruch 1, umfassend ferner Mittel (11), die geeignet sind, optische Effekte zu erzeugen, wobei die Mittel (11), die geeignet sind, optische Effekte zu erzeugen, in Bezug auf die reflektierenden Mittel (10, 4) so angeordnet sind, dass der Betrachter die optischen Effekte durch Perforationen hindurch durch Reflexion auf den reflektierenden Mitteln (10, 4) betrachten kann.

3. Sicheres Dokument (1) nach dem vorhergehenden Anspruch, wobei die Mittel (11), die geeignet sind, optische Effekte zu erzeugen, ein Diffraktionsnetz umfassen, das sichtbare Diffraktionseffekte nullter oder erster Ordnung bewirkt.

4. Sicheres Dokument (1) nach einem der vorhergehenden Ansprüche, umfassend eine Haftfolie (18), die auf dem Träger (2) fixiert ist, wobei die Haftfolie die reflektierenden Mittel (10) umfasst.

5. Sicheres Dokument (1) nach dem vorhergehenden Anspruch, wobei die Haftfolie (18) eine transparente Haftschicht (9), die am Träger (2) haftet, eine reflektierende transparente Schicht (10), die die reflektierenden Mittel (10) bildet, und eine Schicht (11), die geeignet ist, optische Effekte zu erzeugen, umfasst, wobei die Schicht (11), die geeignet ist, optische Effekte zu erzeugen, in Bezug auf die reflektierende transparente Schicht so angeordnet ist, dass der Betrachter die optischen Effekte durch Perforationen hindurch durch Reflexion auf der reflektierenden transparenten Schicht betrachten kann.

6. Sicheres Dokument (1) nach dem vorhergehenden Anspruch, wobei die reflektierende transparente Schicht (10) über der Haftschicht (9) liegt und die Schicht (11), die geeignet ist, optische Effekte zu erzeugen, über der transparenten reflektierenden Schicht (10) liegt.

7. Sicheres Dokument (1) nach einem der Ansprüche 5 oder 6, wobei die Schicht (11), die geeignet ist, optische Effekte zu erzeugen, ein Diffraktionsnetz umfasst, das sichtbare Diffraktionseffekte der Ordnung 0 oder der Ordnung 1 erzeugt, wobei das Diffraktionsnetz in Bezug auf die reflektierende transparente Schicht so angeordnet ist, dass eine Oberfläche der reflektierenden transparenten Schicht strukturiert wird, damit der Betrachter die Diffraktionseffekte durch Perforationen hindurch durch Reflexion auf der reflektierenden transparenten Schicht betrachten kann.

8. Sicheres Dokument (1) nach dem vorhergehenden Anspruch, wobei die reflektierende transparente Schicht (10) aus einem transparenten dielektrischen Material gebildet ist.

9. Sicheres Dokument (1) nach einem der vorhergehenden Ansprüche, wobei das sichere Dokument (1) eine Folie (15) umfasst, die auf der ersten Seite (16) des Trägers fixiert ist, wobei die Folie (15) so angeordnet ist, dass sie erste optische Effekte erzeugt, wobei das sichere Dokument (1) ferner Mittel (11) umfasst, die geeignet sind, zweite optische Effekte zu erzeugen, wobei die Mittel (11), die geeignet sind, zweite optische Effekte zu erzeugen, an der zweiten Seite des Trägers (2) fixiert sind und in Bezug auf die reflektierenden Mittel (10, 4) so angeordnet sind, dass der Betrachter die zweiten optischen Effekte durch Perforationen hindurch durch Reflexion auf den reflektierenden Mitteln (10, 4) betrachten kann, so dass der Betrachter die ersten optischen Effekte und die zweiten optischen Effekte sehen kann, wenn er die erste Seite (16) des Trägers (2) betrachtet.

10. Sicheres Dokument (1) nach dem vorhergehenden Anspruch, umfassend eine Haftfolie (18), die an der zweiten Seite (17) des Trägers (2) haftet, wobei die Haftfolie (18) eine transparente Haftschicht (9), die am Träger (2) haftet, eine reflektierende transparente Schicht (10), die die reflektierenden Mittel (10) bildet, und eine Schicht (11), die geeignet ist, die zweiten optische Effekte zu erzeugen, umfasst, wobei die Schicht (11), die geeignet ist, die zweiten optischen Effekte zu erzeugen, in Bezug auf die reflektierende transparente Schicht so angeordnet ist, dass der Betrachter die zweiten optischen Effekte durch Perforationen hindurch durch Reflexion auf der reflektierenden transparenten Schicht betrachten kann.

11. Verfahren zur Sicherung eines personenbezogenen Dokuments, das einem Inhaber zugeordnet ist, umfassend einen Datenträger und Daten bezüglich des Inhabers, die auf einen ersten Seite eingetragen sind, wobei das Verfahren die folgenden Schritte umfasst:
- Perforieren, bei dem der Datenträger mit Perforationen perforiert wird, die mindestens einen personenbezogenen Datenwert des Inhabers darstellen und für einen Betrachter sichtbar sind;
- Hinzufügen, wobei zum Träger reflektierende Mittel hinzugefügt werden, die an eine zweite Seite des Trägers geklebt werden, die der ersten Seite entgegengesetzt ist, und so angeordnet werden, dass Licht, das die Perforationen des Trägers durchquert, durch die Perforationen hindurch reflektiert wird, so dass ein Betrachter gleichzeitig die eingetragenen Daten und die Perforationen durch Reflexion sehen kann.

12. Verfahren nach Anspruch 11, wobei der Schritt des Hinzufügens nach dem Schritt des Perforierens ausgeführt wird.

13. Verfahren nach einem der Ansprüche 11 oder 12, wobei der Träger (2) eine erste Seite (16) und eine zweite Seite (17), die der ersten Seite (16) entgegengesetzt ist, umfasst und Daten auf der ersten Seite (16) eingetragen sind, und im Schritt des Hinzufügens reflektierende Mittel an der zweiten Seite (17) des Trägers fixiert werden.

14. Verfahren nach dem vorhergehenden Anspruch, umfassend ferner einen Schritt, bei dem eine transparente Folie (15) auf der ersten Seite (16) des Trägers (2) nach dem Schritt des Perforierens fixiert wird.

15. Verfahren nach dem vorhergehenden Anspruch, wobei das Hinzufügen der transparenten Folie (15) und das Hinzufügen der reflektierenden Mittel bei demselben Transfer ausgeführt werden.

## Claims

1. Secure document (1) comprising a data carrier (2), said carrier (2) comprising:
- a first face (16) and a second face (17) that is opposite said first face (16), and
- perforations (3) that are visible to an observer (6),
**characterized in that**:
- the secure document (1) is a personal document associated with an owner, comprising data relating to the owner inscribed on the first face (16);
- the perforations (3) represent a least one personal datum of the owner; and
- the secure document (1) comprises reflecting means (10, 4) that are adhesively bonded to the second face (17) of the carrier (2) and that are arranged so that light that passes through the perforations (3) in the carrier (2) is reflected through the perforations so that an observer can simultaneously see the inscribed data and said perforations in reflection.

2. Secure document (1) according to Claim 1, furthermore comprising means (11) that are suitable for generating optical effects, the means (11) that are suitable for generating optical effects being arranged, with respect to the reflecting means (10, 4), so that the observer is able to observe the optical effects through the perforations in reflection from the reflecting means (10, 4).

3. Secure document (1) according to the preceding claim, wherein the means (11) that are able to generate optical effects comprise a diffraction grating that produces zeroth-order or first-order visible diffraction effects.

4. Secure document (1) according to one of the preceding claims, comprising an adhesive film (18) that is fastened to the carrier (2), the adhesive film comprising the reflecting means (10).

5. Secure document (1) according to the preceding claim, wherein the adhesive film (18) comprises a transparent adhesive layer (9) that adheres to the carrier (2), a reflective transparent layer (10) forming the reflecting means (10) and a layer (11) that is able to produce optical effects, the layer (11) that is able to produce optical effects being arranged, with respect to the reflective transparent layer, so that the observer may observe the optical effects through the perforations in reflection from the reflective transparent layer.

6. Secure document (1) according to the preceding claim, wherein the reflective transparent layer (10) is superposed on the adhesive layer (9), and the layer (11) that is able to produce optical effects is superposed on the transparent reflective layer (10).

7. Secure document (1) according to either of Claims 5 and 6, wherein the layer (11) that is able to produce optical effects comprises a diffraction grating that produces zeroth-order or first-order visible diffraction effects, the diffraction grating being arranged, with respect to the reflective transparent layer, so as to structure a surface of the reflective transparent layer, so that the observer may observe the diffraction effects through the perforations in reflection from the reflective transparent layer.

8. Secure document (1) according to the preceding claim, wherein the reflective transparent layer (10) is made of a transparent dielectric material.

9. Secure document (1) according to any one of the preceding claims, wherein the secure document (1) comprises a film (15) that is fastened to the first face (16) of the carrier, the film (15) being arranged to generate first optical effects, the secure document (1) furthermore comprising means (11) that are able to generate second optical effects, the means (11) that are able to generate second optical effects being fastened to the second face of the carrier (2) and arranged, with respect to the reflecting means (10, 4), so that the observer may observe the second optical effects through the perforations in reflection from the reflecting means (10, 4), so that the observer may see the first optical effects and the second optical effects when he observes the first face (16) of the carrier (2).

10. Secure document (1) according to the preceding claim, comprising an adhesive film (18) that adheres to the second face (17) of the carrier (2), the adhesive film (18) comprising a transparent adhesive layer (9) that adheres to the carrier (2), a reflective transparent layer (10) forming the reflecting means (10) and a layer (11) that is able to produce the second optical effects, the layer (11) that is able to produce the second optical effects being arranged, with respect to the reflective transparent layer, so that the observer may observe the second optical effects through the perforations in reflection from the reflective transparent layer.

11. Method for making secure a personal document that is associated with an owner and that comprises a data carrier and data relating to the owner, said data being inscribed on a first face, the method comprising steps of:
- perforating, in which step the data carrier is perforated with perforations that represent at least one personal datum of the owner and that are visible to an observer; and
- adding, in which step reflecting means are added to the carrier, said means being adhesively bonded to a second face of the carrier, which face is opposite the first face, and arranged so that light passing through the perforations in the carrier is reflected through the perforations so that an observer may simultaneously see the inscribed data and the perforations in reflection.

12. Method according to Claim 11, wherein the adding step is carried out after the perforating step.

13. Method according to either of Claims 11 and 12, wherein the carrier (2) comprises a first face (16) and a second face (17) that is opposite the first face (16), data being inscribed on the first face (16), and wherein, in the adding step, the reflecting means are fastened to the second face (17) of the carrier.

14. Method according to the preceding claim, furthermore comprising a step in which a transparent film (15) is fastened to the first face (16) of the carrier (2) after the perforating step.

15. Method according to the preceding claim, wherein the addition of the transparent film (15) and the addition of the reflecting means is carried out in the same transferring operation.
